# FASCICULE DE BREVET EUROPEEN

(11) **EP 3 615 829 B1**
(45) Date de publication et mention de la délivrance du brevet: **22.11.2023**
(21) Numéro de dépôt: 18722097.5
(22) Date de dépôt: 28.03.2018
(51) Int. Cl.: F16D 48/06

(54) **PROCEDE DE CONTROLE D'UN GROUPE MOTOPROPULSEUR DE VEHICULE AUTOMOBILE POUR EMPECHER LE CALAGE D'UN MOTEUR**
VERFAHREN ZUR STEUERUNG EINES ANTRIEBSSTRANGS EINES KRAFTFAHRZEUGS ZUR VERHINDERUNG DES ABWÜRGENS EINES MOTORS
METHOD FOR CONTROLLING A POWER TRAIN OF A MOTOR VEHICLE TO PREVENT THE STALLING OF AN ENGINE

(30) Priorité: 28.04.2017 FR 1753754
(43) Date de publication de la demande: 04.03.2020
(73) Titulaire: PSA Automobiles SA, 78300 Poissy (FR)
(72) Inventeur: ROCQ, Gaetan, 78125 La Boissiere Ecole (FR); MILHAU, Yohan, 78630 Orgeval (FR); LAUNAY, Cedric, 78680 Epone (FR)
(86) Numéro de dépôt international: PCT/FR2018/050755
(87) Numéro de publication internationale: WO 2018/197767

(56) Documents cités:
- EP-A1- 1 653 108
- EP-A1- 2 696 091
- EP-A2- 1 285 807
- DE-A1- 10 346 885

## Description

Le domaine de l'invention concerne un procédé de contrôle d'un groupe motopropulseur pour empêcher le calage d'un moteur.

Certains véhicules automobiles sont équipés d'une boite de vitesses automatisée et d'un embrayage piloté par le dispositif de contrôle du groupe motopropulseur, appelé également superviseur. C'est le cas des véhicules hybrides à deux ou quatre roues motrices et certaines architectures conventionnelles à traction thermique.

Classiquement, l'embrayage est un dispositif de couplage permettant de solidariser sélectivement en rotation un arbre d'entrainement d'un moteur entrainant et un arbre primaire d'une boite de vitesses en fonction d'une commande de couplage. Comme on le sait, l'embrayage est pilotable soit dans un état d'ouverture désolidarisant complètement le moteur des roues, soit dans un état de glissement dissociant le régime du moteur de celui des roues ou soit dans un état de verrouillage liant le régime du moteur à celui des roues. En cas de ralentissement ou de freinage brutal, si l'embrayage est piloté dans un état de verrouillage, le moteur peut être emmené à un régime de fonctionnement qui est inférieur à un régime de calage, appelé également régime de ralenti. Le régime de calage définit un seuil de régime en dessous duquel le moteur risque de caler si son arbre d'entrainement est amené en dessous de ce seuil de régime.

Dans un état de verrouillage, l'embrayage est piloté par une consigne de verrouillage de manière à permettre un couple transmissible qui est supérieur au couple moteur. Conventionnellement, cette consigne de verrouillage est prédéterminée et constante, et est configurée dans le superviseur à une valeur de couple transmissible suffisamment élevée pour rester supérieure à la plage de couple moteur. En cas de freinage urgent, l'embrayage est piloté par une consigne d'ouverture rapide afin d'éviter le calage du moteur.

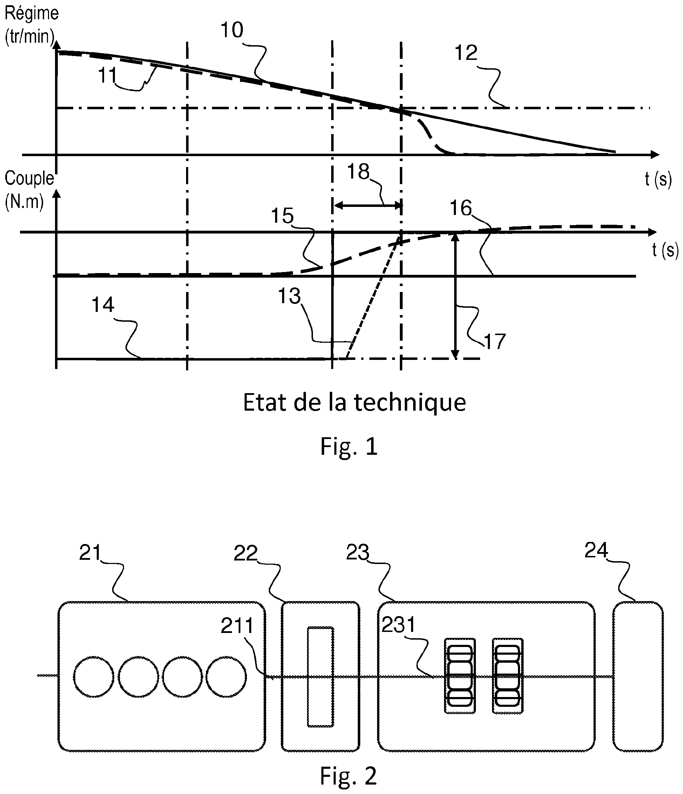

La figure 1 représente une séquence de contrôle d'un dispositif de couplage durant une phase de décélération selon un procédé de contrôle conventionnel de l'état de la technique. Le graphique supérieur représente des valeurs de régime en tours par minute, parmi lesquelles sont représentés le régime de l'arbre primaire 10 de la boite de vitesse, le régime de l'arbre entrainant 11 du moteur en ligne pointillée et le régime de calage 12. Le graphique inférieur représente des valeurs de couple en N.m, la commande de l'embrayage 14 en couple transmissible, le couple transmissible réalisé 13 de l'embrayage, la consigne de la volonté du conducteur 16 et la consigne de couple moteur 15. Comme on le voit sur la figure 1, la consigne de verrouillage est constante et est maintenue identique jusqu'à la détection d'un risque de calage. Lorsque ce risque de calage est détecté, l'embrayage est piloté à une consigne d'ouverture pilotant un couple transmissible nul. Le saut de couple 17 entre la consigne de verrouillage et la consigne d'ouverture entraine un délai d'ouverture 18 provoquant le calage du moteur. Ce délai d'ouverture provient d'une part d'un temps de traitement de calcul et des signaux de pilotage par le superviseur et d'autre part d'un temps d'opération des actionneurs de l'embrayage (par exemple la vitesse de déplacement des actionneurs en pilotage de position, ou la vitesse de remplissage et de montée en pression d'un circuit hydraulique).

Par ailleurs, on connaît de l'état de la technique le document EP0872669B1 décrivant un procédé de contrôle d'un dispositif de couplage dans lequel la consigne d'ouverture pilote une ouverture rapide ou lente en fonction de la vitesse du véhicule au regard d'un premier seuil de vitesse et d'un deuxième seuil de vitesse. On remarquera que cette stratégie est dépendante de la vitesse du véhicule au regard de seuils de vitesses et ne prend pas en compte les rapports de boite de vitesses. Cette stratégie est problématique car pour un roulage à très basse vitesse celle-ci peut provoquer une ouverture de l'embrayage lente et non désirée. Il n'est alors pas possible de rouler avec un embrayage dans un état de verrouillage complet à basse vitesse. De plus, le régime de calage peut varier selon les conditions de roulage, notamment de température du moteur thermique. La stratégie proposée ne s'adapte pas non plus au régime de calage.

On connaît en outre des documents de brevet EP-A1-1653108 ; DE-A1-10346885, EP-A2-1285807 et EP-A1-2696091 des procédés de contrôle conformes au préambule de la revendication 1.

Il existe donc un besoin de résoudre les problèmes mentionnés ci-avant et d'améliorer les stratégies de pilotage d'un groupe motopropulseur qui sont destinées à empêcher le calage du moteur.

Plus précisément, l'invention concerne un procédé de contrôle d'un groupe motopropulseur de véhicule automobile, selon la revendication 1 , lequel groupe motopropulseur comporte un dispositif de couplage, un moteur entrainant et une boite de vitesses, le dit dispositif de couplage étant apte à solidariser sélectivement en rotation un arbre d'entrainement du moteur entrainant et un arbre primaire de la boite de vitesses en fonction d'une commande de couplage. Selon l'invention, le procédé comporte en outre le calcul d'un écart de régime entre le régime de rotation de l'arbre primaire et une valeur d'un régime de calage du moteur entrainant, le calcul d'une consigne de limitation de couplage en fonction de l'écart de régime et le pilotage de la commande de couplage par la consigne de limitation de couplage.

Plus précisément, la consigne de limitation de couplage pilote le dispositif de couplage dans un état de verrouillage.

De préférence, le procédé comporte en outre la détermination d'une consigne de verrouillage du dispositif de couplage, la commande de couplage étant le résultat d'une fonction renvoyant une valeur de couple transmissible qui est la plus faible entre la consigne de limitation de couplage et la consigne de verrouillage.

De plus, lorsque l'écart de régime atteint un seuil minimum prédéterminé, la consigne de limitation de couplage atteint une valeur minimum de limitation de couplage qui est inférieure à la valeur de la consigne de verrouillage.

Dans une variante, la valeur minimum de limitation de couplage est comprise dans une plage de valeurs de couple transmissible restreinte encadrant d'environ 10 N.m la valeur instantanée d'une consigne de couple moteur du moteur entrainant.

De plus, le procédé prévoit que lorsque l'écart de régime devient inférieur au seuil minimum prédéterminé, la commande de couplage est pilotée par une consigne d'ouverture du dispositif de couplage.

Selon un premier mode de calcul, la consigne de limitation de couplage est le résultat d'une fonction linéaire calculant des valeurs de limitation de couplage en fonction d'un gain et de l'écart de régime. Et selon un deuxième mode de calcul, la consigne de limitation de couplage est le résultat d'une cartographie prédéterminée attribuant des valeurs de limitation de couplage pour chaque valeur de l'écart de régime.

Dans une variante, la valeur du régime de calage est calculée en fonction de valeurs instantanées de paramètres de fonctionnement du moteur entrainant.

Il est prévu selon l'invention, un véhicule automobile comportant un groupe motopropulseur piloté par un dispositif de contrôle, dans lequel le dispositif de contrôle exécute le procédé selon l'un quelconque des modes de réalisation précédents.

Grâce à l'invention, le procédé de contrôle permet de réduire le temps d'ouverture du dispositif de couplage quel que soit le rapport de vitesses engagé de la transmission et évolue en fonction des conditions de fonctionnement du moteur thermique et du régime de calage. De plus, il est possible de rouler à basse vitesse tout en maintenant le pilotage du dispositif de couplage dans un état de verrouillage complet. A cet effet, la consigne de limitation adapte le couple transmissible continuellement en fonction du régime de l'arbre primaire de manière à réduire le temps d'ouverture lors de la phase d'ouverture.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente une séquence de contrôle d'un dispositif de couplage durant une phase de décélération selon un procédé conventionnel de l'état de la technique ;
- la figure 2 représente un groupe motopropulseur de véhicule automobile apte à mettre en oeuvre l'invention ;
- la figure 3 représente les modules de pilotage d'un dispositif de contrôle d'un groupe motopropulseur selon l'invention ;
- la figure 4 représente une séquence de contrôle d'un dispositif de couplage durant une phase de décélération selon le procédé de contrôle de l'invention ;
- la figure 5 représente deux modes de calcul de la consigne de limitation de couplage selon l'invention.

L'invention s'applique aux véhicules automobiles dans lesquels, comme cela est représenté en figure 2, le groupe motopropulseur comporte un moteur entrainant 21, une boite de vitesses 23 et un dispositif de couplage piloté 22, et de plus lequel groupe motopropulseur est doté d'un dispositif de contrôle pour les coordonner. Dans un mode de réalisation, le moteur entrainant 21 est un moteur thermique à combustion interne comprenant un arbre d'entrainement 211 lié solidaire en rotation en entrée du dispositif de couplage. La boite de vitesses pilotée 23 comporte un arbre primaire 231 lié solidaire en rotation en sortie du dispositif de couplage et peut être configurée pour appliquer un ou plusieurs rapports de démultiplication entre le moteur thermique et les roues 24 du véhicule. L'arbre secondaire en sortie de la boite de vitesse est lié en transmission aux roues 24 du véhicule.

Le régime moteur exprimé en tours par minute peut être estimé par calcul ou mesuré à partir d'un capteur de régime. De même, le régime de l'arbre primaire 231 de la boite de vitesses peut être mesuré par un capteur ou estimé par calcul. Des méthodes de calcul, connues de l'homme du métier, peuvent être mises en oeuvre par un module d'estimation pour calculer le régime de l'arbre primaire 231 à partir de la vitesse roues du véhicule et les rapports de démultiplication engagés de la boite de vitesses. On ajoutera qu'il est possible d'estimer le régime de l'arbre primaire à partir du régime moteur, et vice-versa, selon l'état du dispositif de couplage.

Par ailleurs, un régime de calage est estimé en continu par un module d'estimation du dispositif de contrôle. Le régime de calage, appelé également régime de ralenti du moteur thermique, est une valeur prédéterminée mémorisée en mémoire du dispositif de contrôle, par exemple environ 800 tr/min, ou est une valeur calculée continuellement en fonction de la valeur instantanée de paramètres de fonctionnement du moteur thermique 21, telle que la température d'eau moteur par exemple.

Le dispositif de couplage 22 est apte à solidariser sélectivement en rotation l'arbre d'entrainement 211 et l'arbre primaire 231 en fonction d'une commande de couplage pour transmettre un couple moteur aux roues. Par exemple, le dispositif de couplage 22 est un embrayage à disques actionné par un actionneur d'embrayage, tel qu'un vérin hydraulique ou une électrovanne de circuit hydraulique, ce dernier étant piloté par une commande de couplage calculée par le dispositif de contrôle du groupe motopropulseur. La commande de couplage est une commande d'actionneur en courant par exemple.

La commande de couplage est apte à piloter l'actionneur d'embrayage pour configurer l'embrayage 22 dans un état de verrouillage, dans un état d'ouverture ou dans un état de glissement. Classiquement, l'embrayage 22 est piloté par une consigne de verrouillage de manière que le couple transmissible de verrouillage soit supérieur au couple moteur du moteur thermique 21, c'est à dire à une valeur de couple transmissible constante qui est supérieure au couple moteur ou à une valeur de couple transmissible ayant un écart de couple constant au dessus du couple moteur. Dans un état d'ouverture, la transmission du couple moteur aux roues 24 est interrompue. L'arbre d'entrainement 211 du moteur thermique 21 et l'arbre primaire 231 de la boite de vitesses sont alors désolidarisés. Le passage d'un état de verrouillage à un état d'ouverture est réalisé au moyen d'une consigne d'ouverture calculée par le dispositif de contrôle du groupe motopropulseur. Ce dernier pilote l'actionneur d'embrayage de manière que le couple transmissible de l'embrayage 22 change d'une valeur de couple transmissible non nulle à une valeur de couple transmissible nulle.

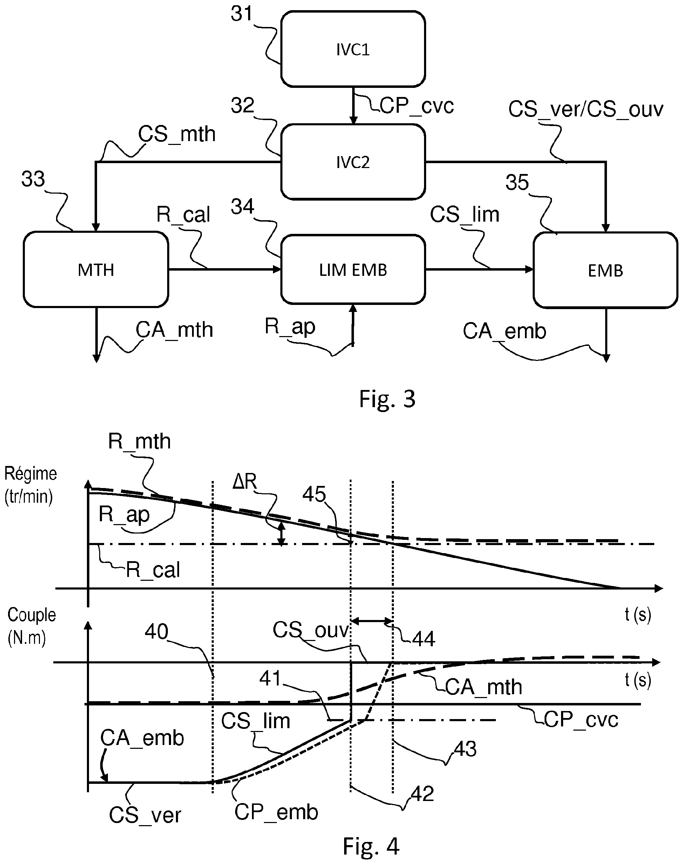

La figure 3 représente des modules de pilotage du dispositif de contrôle du groupe motopropulseur intervenant pour l'exécution du procédé de contrôle selon l'invention. Conventionnellement, le dispositif de contrôle comporte un ou plusieurs calculateurs à circuits intégrés couplés à des mémoires et destinés à exécuter des fonctions de pilotage pour le fonctionnement du groupe motopropulseur. En particulier, les mémoires enregistrent une fonction de pilotage contenant les instructions d'exécution du procédé de contrôle selon l'invention.

Un premier module d'interface 31 calcule une consigne de couple de la volonté du conducteur CP_cvc à partir de l'interface de pilotage de l'habitacle en fonction de paramètres d'accélération ou de freinage provenant des dispositifs de commande de la vitesse du véhicule, tels qu'une mesure de la position d'une pédale d'accélération ou d'une pédale de freinage par un capteur proportionnel, ou bien de la vitesse d'enfoncement ou de l'accélération d'enfoncement des pédales. Un deuxième module de répartition 32 calcule des consignes de couple à répartir entre les actionneurs en couple du groupe motopropulseur, notamment une consigne de couple moteur CS_mth à destination du module de pilotage 33 du moteur thermique 21, les consignes de verrouillage et d'ouverture CS_ver/CS_ouv à destination du module de pilotage 35 de l'embrayage 22. Le module de pilotage 33 du moteur thermique émet une commande de couple moteur CA_mth à destination du moteur 21 et le module de pilotage 35 émet une commande de couplage CA_emb à destination de l'actionneur d'embrayage 22.

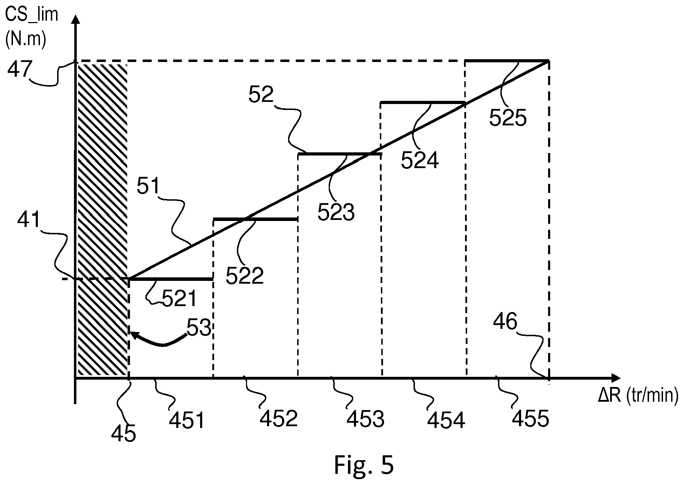

A la base de l'invention, le dispositif de contrôle comporte également un module de limitation 34 du couple transmissible de l'embrayage 22. Ce module de limitation 34 comporte des moyens pour calculer continuellement durant le fonctionnement du véhicule, d'une part un écart de régime ΔR (exprimé en tours par minute) entre le régime de rotation R_ap de l'arbre primaire 231 et une valeur R_cal du régime de calage du moteur thermique 21, et d'autre part une consigne de limitation de couplage CS_lim en fonction de l'écart de régime ΔR destinée à asservir l'embrayage. On décrira par la suite dans la figure 5 des modes de calcul de la consigne de limitation de couplage CS_lim.

De plus, la valeur de la consigne de limitation CS_lim est calculée de manière à assurer un verrouillage de l'embrayage 22. Toutefois, on n'exclut pas la possibilité que la consigne de limitation CS_lim puisse atteindre une valeur de couple transmissible correspondant à un début de glissement de l'embrayage 22. Dans cette éventualité, l'état de glissement est atteint pour une valeur de l'écart de régime ΔR qui s'approche d'un seuil minimum prédéterminée 45 de déclenchement de l'ouverture de l'embrayage. Ce mode de pilotage a pour avantage de réduire le saut de couple lors de l'ouverture de l'embrayage. On réduit ainsi le temps d'ouverture.

On notera qu'il est envisageable de calculer l'écart de régime ΔR à partir d'une estimation ou d'une mesure du régime de l'arbre primaire R_ap, ou à partir d'une mesure ou d'une estimation du régime moteur R_mth. Le module de limitation 34 transmet la consigne de limitation de couplage CS_lim au module de pilotage 35 de l'embrayage.

Dans le cadre de l'invention, le module de pilotage 35 de l'embrayage 22 est asservi soit par la consigne de limitation de couplage CS_lim, soit par la consigne d'ouverture de l'embrayage CS_ouv. La commande de couplage CA_emb est alors pilotée par au moins la consigne de limitation de couplage CS_lim pour actionner l'embrayage 22 dans un état de verrouillage, et par la consigne d'ouverture CS_ouv pour actionner l'embrayage 22 dans un état d'ouverture.

Dans une variante, pour piloter l'état de verrouillage de l'embrayage 22, la commande de couplage CA_emb peut être également asservie par la consigne de verrouillage CS_ver. La consigne de verrouillage permet de maintenir un état de verrouillage stable pour éviter un asservissement de l'embrayage variant continuellement en fonction de l'écart de régime ΔR. Les consigne CS_lim, CS_ouv, CS_ver sont des consignes en couple transmissible exprimées en N.m. De préférence, en état de verrouillage de l'embrayage, la consigne de couplage CA_emb est le résultat de la fonction suivante : CA_emb = MIN(CS_ver ;CS_lim), où MIN est une fonction renvoyant la valeur de couple qui est la plus faible entre les deux consignes. Lorsqu'un état d'ouverture est piloté par le dispositif de contrôle, le module de pilotage 35 pilote la commande de couple CA_emb selon la valeur de la consigne d'ouverture CS_ouv.

En figure 4, nous décrivons la séquence d'exécution du procédé de contrôle du groupe motopropulseur durant une phase de décélération. Sur le graphique supérieur sont représentées les valeurs, en tours par minute, du régime moteur R_mth en trait pointillé et du régime de l'arbre primaire R_ap en trait plein. Le régime de calage R_cal correspond à un seuil constant sur cette séquence. Toutefois, il est possible que le régime de calage puisse varier en fonction des paramètres de fonctionnement du moteur thermique 21. Cette séquence correspond à une séquence de décélération rapide dans laquelle le régime de l'arbre primaire R_ap est amené à une valeur nulle. Sur le graphique inférieur sont représentées les valeurs, en N.m, de la commande de couplage CA_emb et des consignes d'embrayage CS_ver, CS_lim, CS_ouv pilotant à différentes phases de la séquence la commande de couplage CA_emb. La consigne de couple de la volonté conducteur CP_cvc est représentée ainsi que la commande de couple moteur CA_mth et le couple transmissible CP_emb réalisé par l'embrayage, ces deux derniers en traits pointillés.

La figure 4 représente l'écart de régime ΔR par une double flèche à un instant donné de la phase de décélération. Le procédé de contrôle du groupe motopropulseur comporte une étape de calcul continuel de l'écart de régime ΔR et une étape de calcul continuel de la consigne de limitation de couplage CS_lim en fonction de l'écart de régime ΔR. On voit que la consigne CS_lim évolue progressivement et linéairement en fonction de l'écart de régime.

Avant un instant 40, la commande de couplage CA_emb est initialement pilotée à la valeur de la consigne de verrouillage CS_ver qui est supérieure au couple moteur CA_mth. L'embrayage est donc piloté dans un état de verrouillage stable. A cet effet, la consigne de verrouillage a une valeur constante assurant le verrouillage complet de l'embrayage durant toutes les situations de roulage prévisibles.

On remarquera qu'avant l'instant 40, la valeur de la consigne de limitation CS_lim, calculée à partir de l'écart de régime ΔR, est supérieure à la valeur de la consigne de verrouillage CS_ver. Or, comme on l'a dit précédemment, la commande de couplage CA_emb est pilotée par la valeur la plus faible entre les consignes CS_lim et CS_ver.

Après l'instant 40 et jusqu'à l'instant 42, la commande de couplage CA_emb est pilotée par la consigne de limitation CS_lim. En effet, durant cette phase la valeur de l'écart de régime ΔR se réduit et la valeur de la consigne de limitation CS_lim devient inférieure à la valeur de la consigne de verrouillage CS_ver. Comme on le voit, durant la décélération, la consigne CS_lim diminue progressivement entre l'instant 40 et l'instant 42 et la commande en couple CP_emb réalisée par l'embrayage répond à la consigne CS_lim selon un temps de réponse propre à l'actionneur d'embrayage. Ainsi, grâce à l'invention, à l'approche de l'ouverture de l'embrayage, l'actionneur d'embrayage est piloté de manière à réduire petit à petit et continuellement le saut de couple nécessaire pour l'ouverture de l'embrayage et donc la durée d'ouverture. En diminuant le temps d'ouverture de l'embrayage on réduit le risque de calage du moteur thermique, ainsi que les vibrations et l'acoustique du système de commande de l'embrayage du fait de la réduction du saut de couple.

A l'instant 42, l'écart de régime ΔR atteint le seuil minimum prédéterminé 45 de déclenchement de l'ouverture de l'embrayage 22. Par exemple, le seuil minimum 45 peut être un écart de 200 tr/min au dessus du régime de calage du moteur thermique 21. La consigne de limitation de couplage CS_lim pilote à cet instant une valeur minimum de limitation de couplage 41 qui est inférieure à la valeur de la consigne de verrouillage CS_ver. Le passage depuis l'état de verrouillage, piloté à ladite valeur de limitation de couplage 41, vers un état d'ouverture est opéré dans une durée 44.

La valeur minimum de limitation de couplage 41 est une valeur prédéterminée. Dans une autre variante, elle est calculée pour être ajustée à la valeur instantanée de la consigne de couple moteur CS_mth, ou dans une plage de valeurs restreinte encadrant d'environ 10 N.m la valeur instantanée de la consigne de couple moteur CS_mth, soit par exemple [CS_mth - 10 N.m ; CS_mth + 10 N.m]. De préférence, la valeur 41 est supérieure à la consigne de couple moteur CS_mth pour maintenir la transmission totale du couple moteur vers les roues jusqu'à l'instant de l'ouverture de l'embrayage. Toutefois, on n'écarte pas l'éventualité que la valeur de couple transmissible 41 soit sensiblement inférieure à la valeur d'entrée en glissement de manière à réduire la durée d'ouverture 44.

Dans tous les cas, la durée 44 est inférieure à la durée d'une ouverture à partir d'un état de verrouillage piloté par la consigne de verrouillage CS_ver. La durée 44 dépend de la dynamique de la réponse d'ouverture de l'actionneur d'embrayage (temps pour la montée pression dans un circuit hydraulique de commande ou du déplacement en position d'un vérin de commande par exemple).

En outre, après l'instant 42, lorsque l'écart de régime ΔR devient inférieur au seuil minimum prédéterminé 45, la commande de couplage CA_emb est pilotée par la consigne d'ouverture CS_ouv. La dynamique de réponse du couple transmissible CP_emb de l'embrayage est exécutée dans la durée 44 selon la réponse en actionnement la plus rapide qui soit permise par l'actionneur d'embrayage. A l'instant 43, le couple transmissible CP_emb de l'embrayage 22 est nul. Ce dernier est alors dans un état d'ouverture effectif. De plus, le moteur thermique 21 est alors piloté sur son régime de calage R_cal (ou régime de ralenti) pour empêcher son calage. Le régime R_ap de l'arbre primaire poursuit sa descente jusqu'à un régime nul, indiquant l'arrêt du véhicule.

On décrit maintenant en figure 5 le calcul de la consigne de limitation de couplage CS_lim. Deux modes de réalisation non limitatifs sont représentés. Le graphique représente en ordonnée la valeur en couple transmissible de la consigne de limitation CS_lim et en abscisse la valeur de l'écart de régime ΔR en tours par minute. La consigne de limitation CS_lim varie entre des valeurs de couple transmissible comprises entre la valeur minimum de limitation de couplage 41 et une valeur maximum de limitation de couplage 47 pour des valeurs de l'écart de régime ΔR comprises entre le seuil minimum prédéterminé 45 de déclenchement de l'ouverture de l'embrayage 22 et une valeur d'écart maximum 46. La valeur de couple transmissible 47 de verrouillage est égale à la valeur de la consigne de verrouillage CS_ver, ou dans une variante elle peut atteindre la limite maximale de couple transmissible de l'embrayage. La zone hachurée 53 représente la zone d'ouverture de l'embrayage.

Le module de limitation 34 calcule une descente progressive (linéaire ou non linéaire) en couple transmissible de la consigne CS_lim jusqu'à atteindre la valeur minimum de limitation de couplage 41 lorsque l'écart de régime ΔR diminue vers le seuil minimum prédéterminé 45.

Dans un premier mode de calcul, la consigne de limitation de couplage CS_lim est le résultat d'une fonction linéaire continue 51 calculant des valeurs de limitation de couplage en fonction d'un gain et de l'écart de régime ΔR. Le gain est constant comme représenté en figure 5, mais peut aussi être variable en fonction de la valeur de l'écart de régime ΔR.

Toutefois, pour éviter une variation continuelle de la consigne de limitation CS_lim de l'embrayage, il peut être prévu un deuxième mode de calcul dans lequel la consigne de limitation de couplage CS_lim est le résultat d'une cartographie prédéterminée 52 attribuant des valeurs finies de limitation de couplage 521, 522, 523, 524, 525 pour chaque valeur de l'écart de régime ΔR. Ainsi, la descente en couple transmissible en phase de décélération du véhicule se réalise graduellement par paliers. La cartographie est constituée de plusieurs paliers, pouvant être au nombre de deux ou plus selon la gradualité voulue. Dans ce mode de calcul, cinq paliers sont représentés. Chaque palier de couple transmissible 521, 522, 523, 524, 525 correspond à une plage de valeurs d'écart de régime 451, 452, 453, 454, 455 respectivement.

D'autres fonctions de calcul de la consigne de limitation CS_lim à partir de l'écart de régime ΔR sont envisageables en fonction du comportement désiré de l'embrayage pour réduire le couple transmissible de l'embrayage à l'approche du déclenchement de l'ouverture.

L'invention s'applique aux véhicules automobiles conventionnels à traction thermique ou hybride comportant une transmission automatique équipée d'un dispositif de couplage, tel qu'un embrayage piloté (multidisques ou à plateaux de friction) ou un dispositif à crabot, permettant de solidariser l'arbre d'entrainement et l'arbre primaire de la boite de vitesses. Le procédé s'applique sans sortir du cadre de l'invention à tout véhicule équipé d'un moteur entrainant susceptible d'être affecté par un calage lors d'une baisse de régime proche d'un régime de calage, tel qu'un moteur thermique à combustion interne ou un moteur hydraulique par exemple.

## Revendications

1. Procédé de contrôle d'un groupe motopropulseur de véhicule automobile, lequel groupe motopropulseur comporte un dispositif de couplage (22), un moteur entrainant (21) et une boite de vitesses (23), le dit dispositif de couplage (22) étant apte à solidariser sélectivement en rotation un arbre d'entrainement (211) du moteur entrainant (21) et un arbre primaire (231) de la boite de vitesses (23) en fonction d'une commande de couplage (CA_emb), ledit procédé comportant le calcul d'un écart de régime (ΔR) entre le régime de rotation (R_ap) de l'arbre primaire (231) et une valeur (R_cal) d'un régime de calage du moteur entrainant (21), le calcul d'une consigne de limitation de couplage (CS_lim) en fonction de l'écart de régime (ΔR) et le pilotage de la commande de couplage (CA_emb) par la consigne de limitation de couplage (CS_lim) **caractérisé en ce que** . la consigne de limitation de couplage (CS_lim) pilote le dispositif de couplage (22) dans un état de verrouillage et **en ce qu'**il comporte en outre la détermination d'une consigne de verrouillage (CS_ver) du dispositif de couplage (22), la commande de couplage (CA_emb) étant le résultat d'une fonction renvoyant une valeur de couple transmissible qui est la plus faible entre la consigne de limitation de couplage (CS_lim) et la consigne de verrouillage (CS_ver).

2. Procédé selon la revendication 1, **caractérisé en ce que**, lorsque l'écart de régime (ΔR) atteint un seuil minimum prédéterminé (45), la consigne de limitation de couplage (CS_lim) atteint une valeur minimum de limitation de couplage (41) qui est inférieure à la valeur de la consigne de verrouillage (CS_ver).

3. Procédé selon la revendication 2, **caractérisé en ce que** la valeur minimum de limitation de couplage (41) est comprise dans une plage de valeurs de couple transmissible restreinte encadrant d'environ 10 N.m la valeur instantanée d'une consigne de couple moteur (CS_mth) du moteur entrainant (21).

4. Procédé selon la revendication 2 ou 3, **caractérisé en ce que**, lorsque l'écart de régime (ΔR) devient inférieur au seuil minimum prédéterminé (45), la commande de couplage (CA_emb) est pilotée par une consigne d'ouverture (CS_ouv) du dispositif de couplage (22).

5. Procédé selon l'une quelconque des revendication 1 à 4, **caractérisé en ce que** la consigne de limitation de couplage (CS_lim) est le résultat d'une fonction linéaire (51) calculant des valeurs de limitation de couplage en fonction d'un gain et de l'écart de régime (ΔR).

6. Procédé selon l'une quelconque des revendication 1 à 4, **caractérisé en ce que** la consigne de limitation de couplage (CS_lim) est le résultat d'une cartographie prédéterminée (52) attribuant des valeurs de limitation de couplage (521, 522, 523, 524, 525) pour chaque valeur de l'écart de régime (ΔR).

7. Procédé selon l'une quelconque des revendications 1 à 6, **caractérisé en ce que** la valeur (R_cal) du régime de calage est calculée en fonction de valeurs instantanées de paramètres de fonctionnement du moteur entrainant (21).

8. Véhicule automobile comportant un groupe motopropulseur piloté par un dispositif de contrôle, **caractérisé en ce que** le dispositif de contrôle exécute le procédé selon l'une quelconque des revendications 1 à 7.

## Patentansprüche

1. Verfahren zur Steuerung eines Antriebsstrangs eines Kraftfahrzeugs, wobei der Antriebsstrang eine Kupplungsvorrichtung (22), einen Antriebsmotor (21) und ein Getriebe (23) umfasst, wobei die Kupplungsvorrichtung (22) in der Lage ist, eine Antriebswelle (211) selektiv in Drehung zu versetzen ) des Antriebsmotors (21) und einer Primärwelle (231) des Getriebes (23) in Abhängigkeit von einem Kupplungsbefehl (CA_emb), wobei das Verfahren die Berechnung einer Drehzahldifferenz (aR) zwischen der Drehzahl (R_ap.) umfasst ) der Primärwelle (231) und einem Wert (R_cal) einer Stall-Drehzahl des Antriebsmotors (21), die Berechnung einer Soll-Kopplungsbegrenzung (CS_lim) in Abhängigkeit von der Drehzahldifferenz (ti) und der Vorsteuerung des Kopplungsbefehls (CA_emb) durch den Kopplungsbegrenzungssollwert (CS_lim) **dadurch gekennzeichnet, dass** . dass der Kopplungsbegrenzungssollwert (CS_lim) die Kopplungseinrichtung (22) in einen Verriegelungszustand treibt und dass es weiterhin die Bestimmung eines Verriegelungssollwerts (CS_ver) der Kopplungseinrichtung (22) umfasst, wobei das Ergebnis der Kopplungsbefehl (CA_emb) ist einer Funktion, die einen übertragbaren Drehmomentwert zurückgibt, der kleiner als der Kupplungsbegrenzungssollwert (CS_lim) und der Verriegelungssollwert (CS_ver) ist.

2. Verfahren nach Anspruch 1, **dadurch gekennzeichnet, dass** bei Erreichen einer vorgegebenen Mindestschwelle (45) der Drehzahlabweichung (M) der Kupplungsbegrenzungssollwert (CS_lim) einen minimalen Kupplungsbegrenzungswert (41) erreicht, der kleiner als der Verriegelungssollwert ist (CS_ver).

3. Verfahren nach Anspruch 2, **dadurch gekennzeichnet, dass** der minimale Kupplungsbegrenzungswert (41) in einem Bereich eingeschränkter übertragbarer Drehmomentwerte liegt, der den Momentanwert eines Motordrehmomentsollwerts (CS_mth) des Antriebsmotors um ca. 10 Nm umrahmt. 21).

4. Verfahren nach Anspruch 2 oder 3, **dadurch gekennzeichnet, dass**, wenn die Geschwindigkeitsabweichung (M) kleiner als die vorgegebene Mindestschwelle (45) wird, der Kupplungsbefehl (CA_emb) durch einen Öffnungsbefehl (CS_ouv) der Kupplungseinrichtung gesteuert wird ( 22).

5. Verfahren nach einem der Ansprüche 1 bis 4, **dadurch gekennzeichnet, dass** der Kupplungsbegrenzungssollwert (CS_lim) das Ergebnis einer linearen Funktion (51) ist, die Kupplungsbegrenzungswerte als Funktion einer Verstärkung und der Geschwindigkeitsdifferenz (M) berechnet.

6. Verfahren nach einem der Ansprüche 1 bis 4, **dadurch gekennzeichnet, dass** der Kopplungsbegrenzungssollwert (CS_lim) das Ergebnis einer vorgegebenen Karte (52) ist, die jedem Kopplungsbegrenzungswerte (521, 522, 523, 524, 525) zuordnet Wert der Geschwindigkeitsdifferenz (AR).

7. Verfahren nach einem der Ansprüche 1 bis 6, **dadurch gekennzeichnet, dass** der Wert (R_cal) der Überziehgeschwindigkeit in Abhängigkeit von Momentanwerten von Betriebsparametern des Antriebsmotors (21) berechnet wird.

8. Kraftfahrzeug mit einem von einem Steuergerät gesteuerten Antriebsstrang, **dadurch gekennzeichnet, dass** das Steuergerät das Verfahren nach einem der Ansprüche 1 bis 7 ausführt.

## Claims

1. Method for controlling a motor vehicle powertrain, which powertrain comprises a coupling device (22), a driving motor (21) and a gearbox (23), the said coupling device (22) being capable of selectively securing in rotation a drive shaft (211) of the driving motor (21) and a primary shaft (231) of the gearbox (23) as a function of a coupling command (CA_emb), said method comprising the calculation of a speed difference (aR) between the rotational speed (R_ap) of the primary shaft (231) and a value (R_cal) of a stall speed of the driving engine (21), the calculation of a setpoint coupling limitation (CS_lim) as a function of the difference in speed (ti) and the piloting of the coupling command (CA_emb) by the coupling limitation setpoint (CS_lim) **characterized in that** . the coupling limitation setpoint (CS_lim) drives the coupling device (22) into a locking state and **in that** it further comprises the determination of a locking setpoint (CS_ver) of the coupling device (22), the coupling command (CA_emb) being the result of a function returning a transmissible torque value which is the lower between the coupling limitation setpoint (CS_lim) and the locking setpoint (CS_ver).

2. Method according to Claim 1, **characterized in that**, when the speed deviation (M) reaches a predetermined minimum threshold (45), the coupling limitation setpoint (CS_lim) reaches a minimum coupling limitation value (41) which is less than the locking setpoint value (CS_ver).

3. Method according to Claim 2, **characterized in that** the minimum coupling limitation value (41) is included in a range of restricted transmissible torque values framing by approximately 10 N.m the instantaneous value of a motor torque setpoint (CS_mth) of the driving motor (21).

4. Method according to Claim 2 or 3, **characterized in that**, when the speed deviation (M) becomes less than the predetermined minimum threshold (45), the coupling command (CA_emb) is controlled by an opening instruction (CS_ouv) of the coupling device (22).

5. Method according to any one of Claims 1 to 4, **characterized in that** the coupling limitation setpoint (CS_lim) is the result of a linear function (51) calculating coupling limitation values as a function of a gain and the speed difference (M).

6. Method according to any one of Claims 1 to 4, **characterized in that** the coupling limitation setpoint (CS_lim) is the result of a predetermined map (52) assigning coupling limitation values (521, 522, 523, 524, 525) for each value of the speed difference (AR)

7. Method according to any one of Claims 1 to 6, **characterized in that** the value (R_cal) of the stall speed is calculated as a function of instantaneous values of operating parameters of the driving motor (21).

8. Motor vehicle comprising a powertrain controlled by a control device, **characterized in that** the control device executes the method according to any one of Claims 1 to 7.
